# DEMANDE DE BREVET EUROPEEN

(11) **EP 1 101 403 A1**
(43) Date de publication de la demande: **23.05.2001**
(21) Numéro de dépôt: 99402861.1
(22) Date de dépôt: 18.11.1999
(51) Int. Cl.: A21C 3/06

(54) **Dispositif de façonnage de pâtons**

(71) Demandeur: Fontaine, Jérôme, 45000 Orleans (FR)
(72) Inventeur: Fontaine, Jérôme, 45000 Orleans (FR)
(74) Mandataire: Bonnetat, Christian

(57) **Abrégé**

- La présente invention concerne un dispositif de façonnage de pâtons comportant un convoyeur (1) pour l'avance de galettes de pâte (12) ; une toile ou analogue (7), appliquée contre ledit convoyeur (1), en formant une goulotte (10) d'entrée desdites galettes de pâte entre ladite toile (7) et ledit convoyeur (1) ; et des moyens élastiques (13), pressant élastiquement ladite toile (7) contre ledit convoyeur (1) pour enrouler lesdites galettes sur elles-mêmes.
- Selon l'invention, lesdits moyens élastiques sont constitués par un élément élastique unique (13) qui est disposé juste en aval de ladite entrée de la goulotte (10) et qui presse élastiquement ladite toile (7) contre ledit convoyeur (1) selon une ligne transversale à ce dernier en fermant ladite goulotte (10) par une paroi de toile (14) au moins en partie orthogonale audit convoyeur.

## Description

La présente invention concerne les machines de boulangerie, généralement appelées façonneuses, destinées à façonner des galettes de pâte pour former l'ébauche d'un pain ou d'une baguette allongée.

Les façonneuses connues comportent un convoyeur faisant avancer lesdites galettes de pâte ainsi qu'une toile, un feutre ou analogue, appliqué uniformément contre ledit convoyeur sauf à son extrémité amont (par rapport au sens d'avance desdites galettes de pâte) qui est écartée dudit convoyeur pour former une goulotte d'entrée desdites galettes de pâte entre ladite toile et ledit convoyeur, ladite goulotte présentant une entrée de forme allongée disposée transversalement audit convoyeur et ladite extrémité amont de la toile étant par ailleurs maintenue en position fixe pour éviter que ladite toile soit entraînée par ledit convoyeur.

Dans ces machines connues, ladite goulotte présente donc une section, parallèlement à l'avance du convoyeur, en forme de coin, de sorte que l'enroulement des galettes de pâte --nécessaire pour former les pâtons allongés-- est difficile, ces galettes ayant tendance à passer directement entre la toile et le convoyeur. Par suite, elles s'enroulent mal, se plissent et donnent une forme irrégulière aux pâtons allongés, cette irrégularité de forme s'accentuant après l'enroulement du pâton et entraînant la formation de boursouflures dans la mie de pain, ce qui nuit à la régularité et à la présentation des pains.

Par ailleurs, par le document FR-A-1 320 065, on connaît déjà une machine pour la fabrication de croissants et articles analogues comportant :
- un transporteur pour l'avance de morceaux de pâte plats ;
- une paroi souple élastiquement déformable, appliquée contre ledit transporteur, avec son extrémité amont (par rapport au sens d'avance desdits morceaux de pâte plats) écartée dudit transporteur pour former une goulotte d'entrée desdits morceaux de pâte entre ladite paroi souple et ledit transporteur, ladite extrémité amont de la paroi souple étant par ailleurs maintenue en position fixe pour éviter à ladite paroi d'être entraînée par ledit transporteur ; et
- des moyens élastiques, pressant élastiquement ladite paroi souple contre le transporteur pour enrouler lesdits morceaux de pâte plats sur eux-mêmes, lesdits moyens élastiques étant susceptibles d'être soulevés par lesdits morceaux de pâte.

Pour permettre d'obtenir un enroulement satisfaisant desdits morceaux de pâte plats, cette dernière machine doit comporter, d'une part, un dispositif retrousseur additionnel, disposé à l'entrée de ladite goulotte, et, d'autre part, une pluralité de tels moyens élastiques, disposés à la suite l'un de l'autre le long du trajet desdits morceaux de pâte. Il en résulte une structure complexe et onéreuse.

La présente invention a pour objet de remédier aux inconvénients des façonneuses connues avec un dispositif simple et peu onéreux.

A cette fin, selon l'invention, le dispositif de façonnage de pâtons comportant :
- un convoyeur pour l'avance de galettes de pâte ;
- une toile ou analogue, appliquée contre ledit convoyeur, avec son extrémité amont écartée dudit convoyeur pour former une goulotte d'entrée desdites galettes de pâte entre ladite toile et ledit convoyeur, ladite extrémité amont de la toile étant par ailleurs maintenue en position fixe pour éviter que ladite toile soit entraînée par ledit convoyeur ; et
- des moyens élastiques, pressant élastiquement ladite toile contre ledit convoyeur pour enrouler lesdites galettes sur elles-mêmes, lesdits moyens élastiques étant susceptibles d'être soulevés par lesdites galettes enroulées,
est remarquable en ce que lesdits moyens élastiques sont constitués par un élément élastique unique qui est disposé juste en aval de ladite entrée de la goulotte et qui presse élastiquement ladite toile contre ledit convoyeur selon une ligne transversale à ce dernier en fermant ladite goulotte par une paroi de toile au moins en partie orthogonale audit convoyeur.

Ainsi, les galettes de pâte viennent buter par leur bord aval contre ladite paroi de toile au moins en partie orthogonale au convoyeur, de sorte que l'enroulement s'amorce immédiatement sans que la galette de pâte ait tendance à s'introduire sous la toile.

Avantageusement, ledit élément élastique unique peut être un ressort hélicoïdal disposé transversalement au convoyeur. On peut prévoir des moyens de réglage de la pression exercée par l'élément élastique sur la toile. Dans le cas où ledit élément élastique est formé par un ressort hélicoïdal, il est avantageux que lesdits moyens de réglage comportent au moins une vis de traction du ressort hélicoïdal permettant de faire varier la raideur de celui-ci.

De façon connue, ledit dispositif de façonnage peut comporter au moins un rouleau de laminage pour former lesdites galettes de pâte à partir de doses de pâte, ainsi qu'un racleur associé audit rouleau de laminage. Dans ce cas, il est avantageux que ledit élément élastique soit supporté par ledit racleur.

Les figures du dessin annexé feront bien comprendre comment l'invention peut être réalisée. Sur ces figures, des références identiques désignent des éléments semblables.

Les figures 1 et 2 sont deux vues latérales schématiques illustrant un exemple de réalisation des dispositifs de façonnage connus, la figure 1 correspondant au laminage d'une dose de pâte pour former une galette, tandis que la figure 2 illustre l'arrivée au contact du bord aval d'une galette contre la toile d'enroulement.

Les figures 3 et 5 montrent le dispositif de façonnage conforme à la présente invention, respectivement dans les positions des figures 1 et 2.

La figure 4 est une vue de dessus schématique des figures 3 et 5, le carter, la toile et la grille étant supposés ôtés.

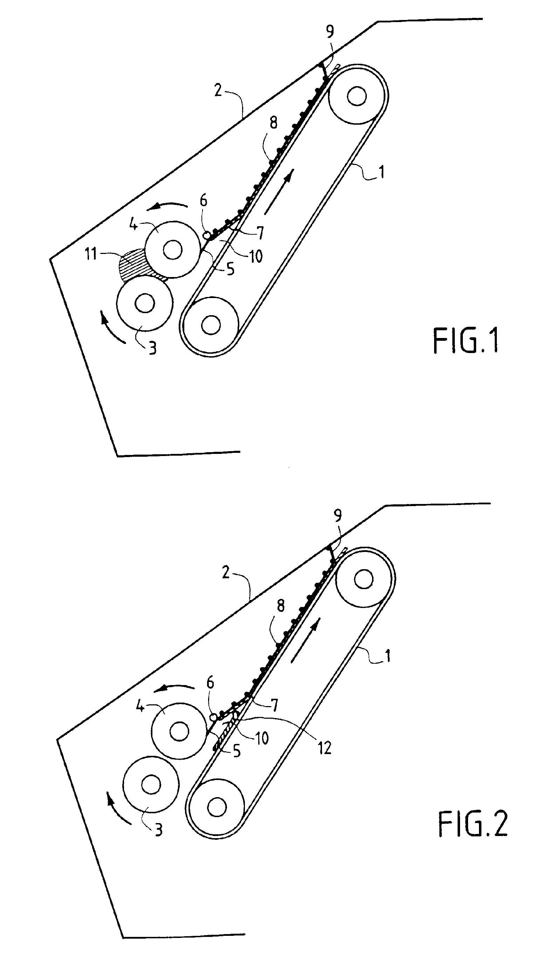

Dans l'exemple de réalisation connu, montré par les figures 1 et 2, le dispositif de façonnage des pâtons comporte un convoyeur 1 à bande sans fin disposé à l'intérieur d'un carter 2. Dans ce dernier, est également enfermé un dispositif de laminage constitué de deux cylindres coopérants 3 et 4.

Dans le mode de réalisation représenté, le convoyeur 1 est incliné de bas en haut et le dispositif de laminage 3 et 4 est disposé au voisinage de l'extrémité inférieure du convoyeur 1, au-dessus du brin supérieur de celui-ci. Au cylindre supérieur 4 est associé un racleur à lame 5 supporté par une barre 6 transversale au convoyeur 1. De plus, à cette barre 6, est également fixée une toile ou un feutre 7 appliqué contre le convoyeur 1 et tiré par celui-ci en direction de son extrémité supérieure.

Le feutre 7 est uniformément appliqué contre le convoyeur 1 au moyen d'une grille souple 8, dont l'extrémité supérieure est accrochée, en 9, audit carter 2 ou au cylindre supérieur du convoyeur 1.

La barre 6 est écartée dudit convoyeur, de sorte que l'extrémité amont de la toile 7 est elle-même écartée du convoyeur 1 et forme une goulotte 10, allongée et disposée transversalement audit convoyeur.

Ainsi, lorsqu'une dose de pâte 11 est introduite entre les cylindres de laminage 3 et 4, ceux-ci forment une galette de pâte 12 qui tombe sur le convoyeur 1 et est amenée par celui-ci dans la goulotte 10. Celle-ci ayant une section triangulaire, le bord amont de la galette 12 a tendance à s'introduire dans l'extrémité aval pointue de la goulotte, ce qui nuit, comme cela a été dit ci-dessus, à l'enroulement du pâton.

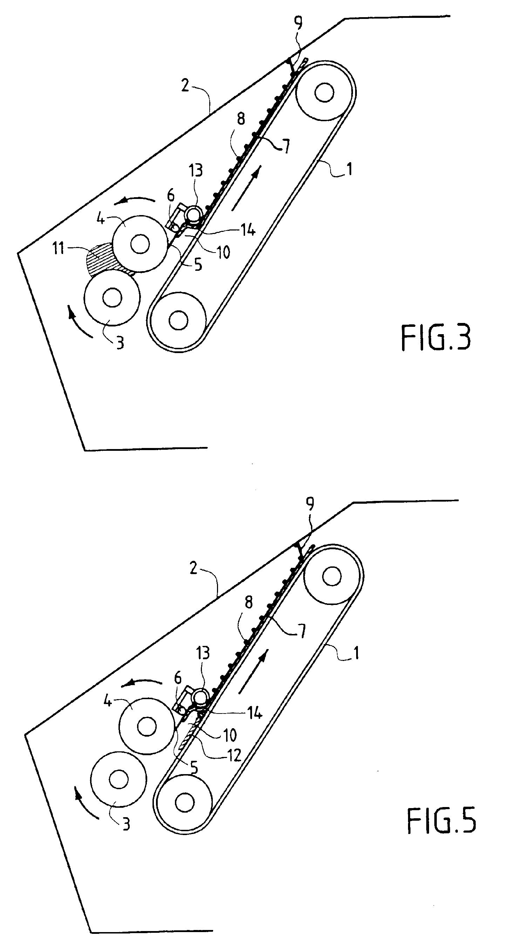

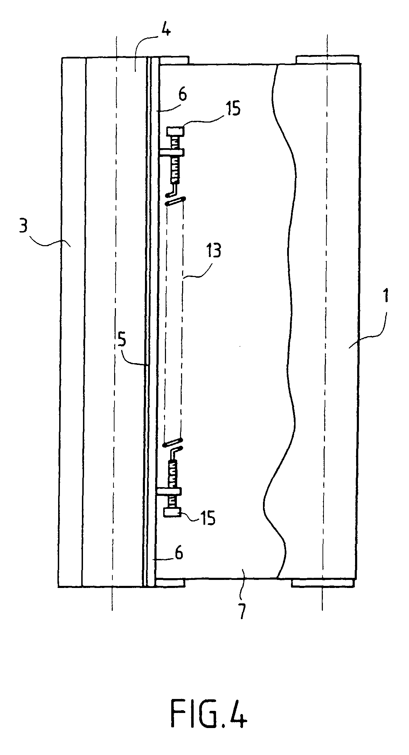

Pour remédier à cet inconvénient, le dispositif conforme à l'invention et représenté sur les figures 3, 4 et 5 comporte un ressort hélicoïdal 13 disposé transversalement au convoyeur 1, juste en aval de l'entrée de la goulotte et apte à presser élastiquement le feutre 7 contre le convoyeur 1 selon une ligne transversale à ce dernier en fermant la goulotte 10 par une paroi de toile 14 au moins en partie orthogonale audit convoyeur.

Le ressort hélicoïdal 13 est supporté par la barre transversale 6 du racleur et on prévoit, aux extrémités du ressort 13, au moins une vis de traction 15 susceptible de jouer sur l'allongement du ressort 13 pour faire varier sa raideur.

Ainsi, lorsqu'une dose de pâte 11 (voir la figure 3) est laminée par les cylindres 3 et 4 et tombe sur le convoyeur 1, la galette de pâte correspondante 12 heurte par son extrémité aval la paroi orthogonale 14 et peut s'enrouler immédiatement, sans difficulté.

Les vis 15 étant réglées en fonction de la viscosité de la pâte dudit pâton, celui-ci peut facilement passer sous ledit ressort et être acheminé vers l'extrémité aval supérieure dudit convoyeur 1, de laquelle il est conduit vers l'opération suivante de préparation des pâtons.

Bien entendu, bien que dans la description précédente on ait fait appel à un mode de réalisation particulier avec convoyeur incliné vers le haut, on comprendra aisément que la présente invention n'est pas limitée à ce type de dispositif de façonnage et peut être appliquée aux autres types connus.

## Revendications

1. Dispositif de façonnage de pâtons comportant :
- un convoyeur (1) pour l'avance de galettes de pâte (12) ;
- une toile ou analogue (7), appliquée contre ledit convoyeur (1), avec son extrémité amont écartée dudit convoyeur pour former une goulotte (10) d'entrée desdites galettes de pâte entre ladite toile (7) et ledit convoyeur (1), ladite extrémité amont de la toile étant par ailleurs maintenue en position fixe pour éviter que ladite toile soit entraînée par ledit convoyeur ; et
- des moyens élastiques (13), pressant élastiquement ladite toile (7) contre ledit convoyeur (1) pour enrouler lesdites galettes sur elles-mêmes, lesdits moyens élastiques (13) étant susceptibles d'être soulevés par lesdites galettes enroulées,
caractérisé en ce que lesdits moyens élastiques sont constitués par un élément élastique unique (13) qui est disposé juste en aval de ladite entrée de la goulotte (10) et qui presse élastiquement ladite toile (7) contre ledit convoyeur (1) selon une ligne transversale à ce dernier en fermant ladite goulotte (10) par une paroi de toile (14) au moins en partie orthogonale audit convoyeur.

2. Dispositif de façonnage selon la revendication 1,
caractérisé en ce que ledit élément élastique unique (13) est un ressort hélicoïdal, disposé transversalement audit convoyeur.

3. Dispositif de façonnage selon l'une des revendications 1 ou 2,
caractérisé en ce qu'il comporte des moyens (15) de réglage de la pression exercée par ledit élément élastique unique sur ladite toile.

4. Dispositif de façonnage selon les revendications 2 et 3,
caractérisé en ce que lesdits moyens de réglage (15) sont formés par au moins une vis de traction dudit ressort hélicoïdal.

5. Dispositif de façonnage selon l'une quelconque des revendications 1 à 4, comportant au moins un rouleau de laminage (3, 4) pour former lesdites galettes de pâte (12) à partir de doses de pâte (11) et un racleur (5, 6) associé audit rouleau de laminage,
caractérisé en ce que ledit élément élastique unique (13) est supporté par ledit racleur.
